(19) Europäisches Patentamt
European Patent Office
Office européen des brevets

(11) **EP 4 375 817 B1**

(12) **EUROPEAN PATENT SPECIFICATION**

(45) Date of publication and mention
of the grant of the patent:
**25.02.2026 Bulletin 2026/09**

(21) Application number: **22890124.5**

(22) Date of filing: **22.07.2022**

(51) International Patent Classification (IPC):
**G06F 3/041** *(2006.01)*    **G06F 3/0346** *(2013.01)*
**G06F 3/038** *(2013.01)*    **G06F 3/044** *(2006.01)*

(52) Cooperative Patent Classification (CPC):
**G06F 3/044; G06F 1/1626; G06F 1/1643;
G06F 1/1694; G06F 3/0346; G06F 3/041;
G06F 3/0416; G06F 3/04186**

(86) International application number:
**PCT/KR2022/010782**

(87) International publication number:
**WO 2023/080388 (11.05.2023 Gazette 2023/19)**

(54) **ELECTRONIC DEVICE AND CONTROL METHOD THEREOF**

ELEKTRONISCHE VORRICHTUNG UND STEUERUNGSVERFAHREN DAFÜR

DISPOSITIF ÉLECTRONIQUE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2021 KR 20210149153**

(43) Date of publication of application:
**29.05.2024 Bulletin 2024/22**

(73) Proprietor: **Samsung Electronics Co., Ltd.**
**Suwon-si, Gyeonggi-do 16677 (KR)**

(72) Inventors:
• **NAMKOONG, Kyeong**
**Suwon-si Gyeonggi-do 16677 (KR)**
• **KIM, Hyeonggwon**
**Suwon-si Gyeonggi-do 16677 (KR)**
• **KWON, Yeongjun**
**Suwon-si Gyeonggi-do 16677 (KR)**
• **SHIN, Minjae**
**Suwon-si Gyeonggi-do 16677 (KR)**
• **KIM, Gwanhyung**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
**EP-A2- 2 159 670**    **KR-A- 20100 095 126**
**KR-A- 20130 001 320**    **KR-A- 20140 032 265**
**KR-A- 20150 055 294**    **KR-B1- 101 683 019**
**US-A1- 2008 012 835**    **US-A1- 2009 225 026**
**US-A1- 2010 172 518**    **US-A1- 2010 182 247**
**US-A1- 2012 176 343**    **US-A1- 2015 181 337**
**US-A1- 2015 253 874**

**Description**

**[Technical Field]**

The disclosure relates to an electronic apparatus and a control method thereof. More particularly, the disclosure relates to an electronic apparatus which receives a touch input of a user and a control method thereof.

**[Background Art]**

In order for a user to perform touch input on an electronic apparatus such as a smart phone and a tablet personal computer (PC), a method of contacting a body part of a user such as a finger with a display and a non-contact touch method of performing touch input without contacting a body part of the user are generally used. Specifically, when a touch is recognized by sensing capacitance, an instance of touch being sensed at another position and not a position intended by the user may occur.

KR101683019B1 relates to a touch panel and a control method for preventing wrong touch input. KR20140032265A relates to a conventional touch sensing method reflecting user preferences. US 2015/181337A1, US 2010/172518A1, and US 2009/225026A1 relate to conventional devices with orientation sensors to detect orientation of a device. US 2008/012835A1, EP 2159670A2, and US 2012/176343A1 relate to a conventional methods for detecting unintended touch input.

**[Disclosure]**

**[Technical Problem]**

Aspects of the disclosure are to address at least the above-mentioned problems and/or disadvantages and to provide at least the advantages described below. Accordingly, an aspect of the disclosure is to provide an electronic apparatus which identifies a touch position intended by a user from among a plurality of touch positions taking into consideration orientation information of the electronic apparatus and a control method thereof.

**[Technical Solution]**

The present invention is defined by the appended set of claims. In accordance with an aspect of the disclosure, an electronic apparatus is provided. The electronic apparatus includes a display panel, a capacitive sensor disposed at a lower part of the display panel, an acceleration sensor, and a processor configured to identify orientation information of the electronic apparatus based on first sensing data obtained by the acceleration sensor, identify a plurality of touch positions corresponding to touch data of greater than or equal to a threshold value in the display panel based on second sensing data obtained by the capacitive sensor, identify a relatively upper side touch position from among the plurality of touch positions based on the orientation information and coordinate information corresponding to respective touch positions, and perform an operation corresponding to the identified touch position.

The coordinate information corresponding to the respective touch positions may include an X-axis value and a Y-axis value, and the processor may be configured to identify at least one axis from among the X-axis or the Y-axis based on the orientation information, and identify the relatively upper side touch position from among the plurality of touch positions by comparing the identified axis from among coordinate values corresponding to the respective touch positions.

The processor may be configured to identify, based on the electronic apparatus being identified as in a horizontal mode based on the orientation information, the relatively upper side touch position from among the plurality of touch positions by comparing the Y-axis value from among the coordinate values corresponding to the respective touch positions, and identify, based on the electronic apparatus being identified as in a vertical mode based on the orientation information, the relatively upper side touch position from among the plurality of touch positions by comparing the X-axis value from among the coordinate values corresponding to the respective touch positions.

The processor may be configured to identify, based on the electronic apparatus being identified as in the horizontal mode, a touch position at which a magnitude of the Y-axis value is relatively great as the relatively upper side touch position by comparing the magnitude of the Y-axis value from among the coordinate values corresponding to the respective touch positions, and identify, based on the electronic apparatus being identified as in the vertical mode, a touch position at which a magnitude of the X-axis value is relatively great as the relatively upper side touch position by comparing the magnitude of the X-axis value from among the coordinate values corresponding to the respective touch positions.

The coordinate information corresponding to the respective touch positions may include an X-axis value and a Y-axis value, and the processor may be configured to identify at least one axis from among an X-axis or a Y-axis based on the orientation information, and identify the relatively upper side touch position from among the plurality of touch positions by comparing an absolute value of an axis value corresponding to the identified at least one axis from among the coordinate values corresponding to the respective touch positions. The processor may be configured to identify, based on the electronic apparatus being identified as tilted in a gravity direction, the relatively upper side touch position from among the plurality of touch positions by comparing the absolute value of the identified plurality of axis values from among the coordinate values corresponding to the respective touch positions.

The processor may be configured to calculate a first value corresponding to the gravity direction based on a square root value of a value in which the X-axis value and the Y-axis value are squared and summated from among the coordinate values corresponding to a first touch position, the orientation information, and a ratio of the Y-axis value with respect to the X-axis value of the first touch position, calculate a second value corresponding to the gravity direction based on a square root value of a value in which the X-axis value and the Y-axis value are squared and summated from among the coordinate values corresponding to a second touch position, the orientation information, and a ratio of the Y-axis value with respect to the X-axis value of the second touch position, and identify the touch position corresponding to a relatively great value from among the first value and the second value as the relatively upper side touch position.

The capacitive sensor may be implemented as a capacitance panel disposed at a lower part of the display panel, or implemented as a plurality of capacitive sensors disposed spaced apart from one another at the lower part of the display panel.

The processor may be configured to identify, based on a non-contact type touch input being received, the plurality of touch positions corresponding to touch data of greater than or equal to a threshold value in the display based on the second sensing data.

In accordance with another aspect of the disclosure, a control method of an electronic apparatus is provided. The control method includes identifying orientation information of the electronic apparatus based on first sensing data obtained by an acceleration sensor, identifying a plurality of touch positions corresponding to touch data of greater than or equal to a threshold value in a display panel based on second sensing data obtained by a capacitive sensor, identifying a relatively upper side touch position from among the plurality of touch positions based on the orientation information and coordinate information corresponding to respective touch positions, and performing an operation corresponding to the identified touch position.

The coordinate information corresponding to the respective touch positions may include an X-axis value and a Y-axis value, and the identifying the relatively upper side touch position may include identifying at least one axis from among an X-axis or a Y-axis based on the orientation information, and identifying the relatively upper side touch position from among the plurality of touch positions by comparing an axis value corresponding to the identified axis from among coordinate values corresponding to the respective touch positions.

The identifying the relatively upper side touch position may include identifying, based on the electronic apparatus being identified as in a horizontal mode based on the orientation information, the relatively upper side touch position from among the plurality of touch positions by comparing the Y-axis value from among the coordinate values corresponding to the respective touch positions, and identifying, based on the electronic apparatus being identified as in a vertical mode based on the orientation information, the relatively upper side touch position from among the plurality of touch positions by comparing the X-axis value from among the coordinate values corresponding to the respective touch positions.

The identifying the relatively upper side touch position may include identifying, based on the electronic apparatus being identified as in the horizontal mode, a touch position at which a magnitude of the Y-axis value is relatively great as the relatively upper side touch position by comparing the magnitude of the Y-axis value from among the coordinate values corresponding to the respective touch positions, and identifying, based on the electronic apparatus being identified as in the vertical mode, a touch position at which a magnitude of the X-axis value is relatively great as the relatively upper side touch position by comparing the magnitude of the X-axis value from among the coordinate values corresponding to the respective touch positions.

The coordinate information corresponding to the respective touch positions may include at least one axis value from among an X-axis value or a Y-axis value, and the identifying the upper side touch position may include identifying at least one axis from among an X-axis or a Y-axis based on the orientation information and identifying the relatively upper side touch position from among the plurality of touch positions by comparing the absolute value of the axis value corresponding to the identified at least one axis from among the coordinate values corresponding to the respective touch positions.

The identifying the relatively upper side touch position may include identifying, based on the electronic apparatus being identified as tilted in a gravity direction, the relatively upper side touch position from among the plurality of touch positions by comparing an absolute value of the identified plurality of axis values from among the coordinate values corresponding to the respective touch positions.

The identifying the relatively upper side touch position may include calculating a first value based on a square root value of a value in which the X-axis value and the Y-axis value are squared and summated from among the coordinate values corresponding to a first touch position, the orientation information, and a ratio of the Y-axis value with respect to the X-axis value of the first touch position, calculating a second value based on a square root value of a value in which the X-axis value and the Y-axis value are squared and summated from among the coordinate values corresponding to a second touch position, the orientation information, and a ratio of the Y-axis value with respect to the X-axis value of the second touch position, and identifying a touch position corresponding to a relatively great value from among the first value and the second value as the relatively upper side touch position.

The capacitive sensor may be implemented as a capacitance panel disposed at a lower part of the display panel, or implemented as a plurality of capacitive sensors disposed spaced apart from one another at the lower part of the display panel.

The identifying the plurality of touch positions may include identifying, based on a non-contact type touch input being received, the plurality of touch positions corresponding to touch data of greater than or equal to a threshold value in the display based on the second sensing data.

In accordance with another aspect of the disclosure, a non-transitory computer readable recording medium storing computer instructions for an electronic apparatus to perform an operation based on being executed by a processor of the electronic apparatus is provided. The operation includes identifying orientation information of the electronic apparatus based on first sensing data obtained by an acceleration sensor, identifying a plurality of touch positions corresponding to touch data of greater than or equal to a threshold value in a display based on second sensing data obtained by a capacitive sensor, identifying a relatively upper side touch position from among the plurality of touch positions based on the orientation information and coordinate information corresponding to respective touch positions, and performing an operation corresponding to the identified touch position.

[Advantageous Effects]

According to various embodiments of the disclosure, a touch position intended by a user may be identified from among a plurality of touch positions taking into consideration orientation information of an electronic apparatus and information on a touch position. Accordingly, user satisfaction may be enhanced.

[Description of Drawings]

FIG. 1A is a diagram illustrating a method of identifying a touch position of a user according to an embodiment of the disclosure;

FIG. 1B is a diagram illustrating a method of identifying a touch position of a user according to an embodiment of the disclosure;

FIG. 2 is a block diagram illustrating a configuration of an electronic apparatus according to an embodiment of the disclosure;

FIG. 3A is a diagram illustrating an identification method of a touch position at a relatively upper side from a horizontal mode according to an embodiment of the disclosure;

FIG. 3B is a diagram illustrating an identification method of a touch position at a relatively upper side from a horizontal mode according to an embodiment of the disclosure;

FIG. 4A is a diagram illustrating an identification method of a touch position at a relatively upper side from a vertical mode according to an embodiment of the disclosure;

FIG. 4B is a diagram illustrating an identification method of a touch position at a relatively upper side from a vertical mode according to an embodiment of the disclosure;

FIG. 5A is a diagram illustrating an identification method of a touch position at a relatively upper side according to an embodiment of the disclosure;

FIG. 5B is a diagram illustrating an identification method of a touch position at a relatively upper side according to an embodiment of the disclosure;

FIG. 6 is a diagram illustrating a detailed configuration of an electronic apparatus according to an embodiment of the disclosure; and

FIG. 7 is a flowchart illustrating a control method of an electronic apparatus according to an embodiment of the disclosure.

[Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents. It is to be understood that the singular forms "a," "an," and "the" include plural referents unless the context clearly dictates otherwise. Thus, for example, reference to "a component surface" includes reference to one or more of such surfaces.

The terms used in the various embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein should be defined based on the meaning of the term and the overall context of the disclosure, and not simply by its designation.

In the disclosure, expressions such as "comprise," "may comprise," "include," "may include," or the like are used to designate a presence of a corresponding characteristic (e.g., elements such as numerical value, function, operation, or component, etc.), and not to preclude a presence or a possibility of additional characteristics.

The expression at least one of A and/or B is to be understood as indicating any one of "A" or "B" or "A and B."

Expressions such as "first," "second," "1st," and "2nd" used herein may be used to refer to various elements regardless of order and/or importance, and it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to another element, or as being coupled through other element (e.g., third element).

It is to be understood that the terms such as "comprise" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used in the embodiments herein perform at least one function or operation, and may be implemented with a hardware or software, or a combination of hardware and software. In addition, a plurality of "modules" or a plurality of "parts," except for a "module" or a "part" which needs to be implemented to a specific hardware, may be integrated to at least one module and implemented in at least one processor (not shown).

An embodiment of the disclosure will be described in greater detail below with reference to the accompanied drawings.

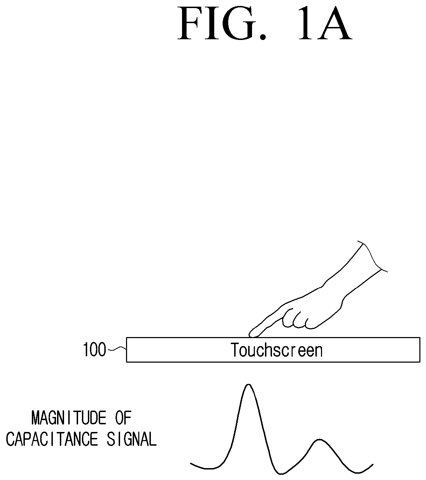

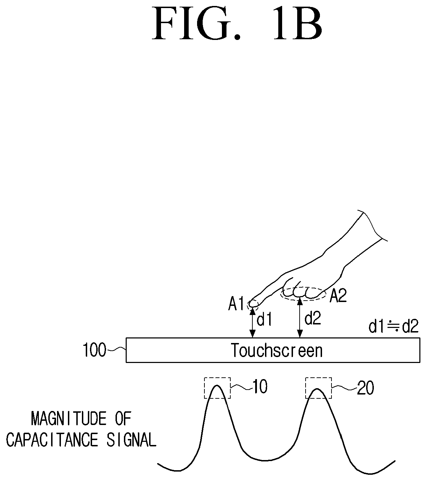

FIGS. 1A and 1B are diagrams illustrating a method of identifying a touch position of a user according to various embodiments of the disclosure.

FIGS. 1A and 1B are for describing a touch sensing method of a capacitance method, where FIG. 1A represents an example of a contact touch input and FIG. 1B represents an example of a non-contact touch input.

Referring to FIG. 1A, an electronic apparatus 100 may include a display panel (not shown) which constitutes a touch screen together with a touch panel, and may include at least one from among a smartphone, a tablet personal computer (PC), a mobile medical device, a wearable device, an interactive whiteboard, and a kiosk, but is not limited thereto. Accordingly, in the drawings below which include FIG. 1A, an embodiment of the electronic apparatus 100 being implemented as a tablet PC is shown, but is not limited thereto.

According to an embodiment, when a contact touch is input using a body part of a user, for example a finger, as shown in FIG. 1A, the electronic apparatus 100 may obtain a magnitude of a capacitance signal through a capacitive sensor (not shown). The magnitude of the capacitance signal may be obtained as follows.

【Math Figure 1】

$$C = \varepsilon \times \frac{A}{d}$$

$C$ represents the magnitude of the capacitance signal, $\varepsilon$ represents a dielectric constant, $A$ represents a contact surface with the capacitive sensor, and $d$ represents a distance between the capacitive sensor and an object, and the magnitude of the capacitance signal may be proportional to the contact surface and inversely proportional to the distance with the sensor.

The electronic apparatus 100 may identify a position at which the magnitude of the capacitance signal obtained by the capacitive sensor (not shown) is at its greatest as the touch position. Then, the electronic apparatus 100 may perform an operation which corresponds to the identified touch position.

Referring to FIG. 1B, when the non-contact touch is input using a body part of the user, for example, a finger, the electronic apparatus 100 may obtain the magnitude of the capacitance signal through the capacitive sensor (not shown).

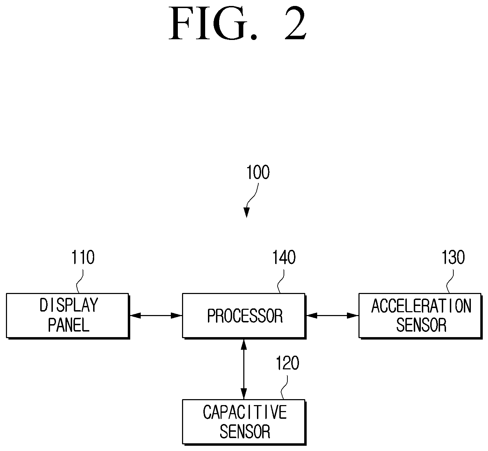

For example, when there is a non-contact type touch input which uses a finger of the user, because a difference in a distance magnitude of the finger spread by the user with the capacitive sensor 120 of FIG. 2 and a distance magnitude of the remaining fingers with the capacitive sensor 120 of FIG. 2 is relatively smaller compared to a contact type, a difference in magnitude of an amount of change in capacitance which corresponds to a body part of the user may be relatively smaller compared to the contact type.

For example, a value of a first capacitance signal magnitude 10 obtained based on the size of A1 and d1 and a value of a second capacitance signal magnitude 20 obtained based on the size of A2 and d2 may be similar or the latter may be greater.

Based on the second capacitance signal magnitude 20 being greater, the electronic apparatus 100 may identify a position corresponding to a second capacitance signal magnitude 20 as the touch position, and there may be an instance where another position which is not the position intended by the user is identified as the touch position. However, the problem described above is not limited to the non-contact type touch input, and may arise even in the contact type touch input.

Accordingly, various embodiments identifying the touch position intended by the user from among a plurality of touch positions will be described below taking into consideration orientation information of the electronic apparatus and information on the touch position.

FIG. 2 is a block diagram illustrating a configuration of an electronic apparatus according to an embodiment of the disclosure.

Referring to FIG. 2, the electronic apparatus 100 may include a display panel 110, a capacitive sensor 120, an acceleration sensor 130, and a processor 140.

The display panel 110 may be implemented as a display including a self-emissive device or a display including a non-emissive device and a backlight. For example, the display panel 110 may be implemented as a display of various forms such as, for example, and without limitation, a liquid crystal display (LCD), an organic light emitting diode (OLED) display, a light emitting diodes (LEDs), a micro LED, a mini LED, a plasma display panel (PDP), a quantum dot (QD) display, a quantum dot light emitting diodes (QLED), and the like. In the display panel 110, a driving circuit, which may be implemented in the form of an amorphous silicon thin film transistor (a-si TFT), a low temperature poly silicon (LTPS) TFT, an organic TFT (OTFT), or the like, a backlight unit, and the like may be included.

The display panel 110 may be implemented as a flexible display, a rollable display, a three-dimensional display (3D display), a display in which a plurality of display modules is physically coupled, and the like. In addition, the display panel 110 may be configured as a touch screen together with a touch panel, and may be formed of a flexible panel.

The capacitive sensor 120 may sense capacitance by a capacitor which is an electrical device connected with an electrode, a matter equivalent thereto, a human body contact, and the like. The processor (not shown) may obtain the amount of change in capacitance according to a change in distance and change in contact area between the electrode within the capacitive sensor 120 with the capacitor or a matter equivalent thereto. The capacitive sensor 120 may be disposed at a lower part of the display panel 110. In this case, the capacitive sensor 120 may be implemented as a capacitance panel disposed at the lower part of the display panel 110, or implemented with a plurality of capacitive sensors being disposed spaced apart from one another at the lower part of the display panel 110.

The acceleration sensor 130 may be a sensor configured to measure an acceleration speed of an object or an intensity of impact. According to an embodiment, the acceleration sensor 130 may identify dynamic force such as acceleration, vibration, and impact of an object by processing an output signal. The acceleration sensor 130 may be one, but may also be in plurality. Based on there being one acceleration sensor 130, the acceleration sensor 130 may be disposed on a main board on which basic components are mounted, but is not limited thereto. Based on there being multiple acceleration sensors 130, the acceleration sensors 130 may be disposed at a position spaced apart from one another, for example, the main board, a sub board, a bezel, and the like.

The processor 140 may control the overall operation of the electronic apparatus 100. Specifically, the processor 140 may control the overall operation of the electronic apparatus 100 connected to respective configurations of the electronic apparatus 100. The processor 140 may perform, by executing at least one instruction stored in a memory (not shown), an operation of the electronic apparatus 100 according to various embodiments.

According to an embodiment, the processor 140 may be designated to various designations such as, for example, and without limitation, a digital signal processor (DSP), a microprocessor, a central processing unit (CPU), a micro controller unit (MCU), a micro processing unit (MPU), a neural processing unit (NPU), a controller, an application processor (AP), and the like, but is described as the processor 140 in the disclosure.

The processor 140 may be implemented as a system on chip (SoC) or a large scale integration (LSI), and may be implemented in the form of a field programmable gate array (FPGA). In addition, the processor 140 may include a volatile memory such as static random access memory (SRAM).

Below, the disclosure will be described assuming that an axis parallel with a relatively long edge from among a plurality of edges is an X-axis, an axis parallel with a relatively short edge is a Y-axis, and an axis perpendicular with the respective X-axis and Y-axis is a Z-axis. However, the embodiment is not limited thereto, and the axis parallel with the relatively long edge from among the plurality of edges may be one of the Y-axis or the Z-axis.

According to an embodiment, the processor 140 may identify the orientation information of the electronic apparatus 100 based on a first sensing data obtained by the acceleration sensor 130. The processor 140 may obtain a magnitude of acceleration of the respective axis directions that is applied to the electronic apparatus 100 through the acceleration sensor 130, and the first sensing data may include information on the acceleration magnitude of the respective axis directions that is applied to the electronic apparatus 100.

According to an example, the processor 140 may identify the orientation information of the electronic apparatus 100 based on the first sensing data obtained by the acceleration sensor 130. In this case, the orientation information may include information on an angle formed by the respective axes with a direction of gravity acceleration. However, for convenience of description, it may be assumed that the Z-axis forms 90° with the direction of gravity acceleration in the description below.

According to an example, based on the Y-axis of the electronic apparatus 100 being parallel with the direction of gravity acceleration, the processor 140 may obtain data having a size of 0G (here, 1G is the same as a magnitude of gravity acceleration) in the X-axis direction and a size of 1G in the Y-axis direction through the acceleration sensor 130, and based therefrom, identify as the X-axis and the Y-axis forming angles of 90° and 0° with the direction of gravity acceleration, respectively.

According to another example, based on the X-axis of the electronic apparatus 100 being parallel with the direction of gravity acceleration, the processor 140 may obtain data having the size of 0G in the Y-axis direction and the size of 1G in the X-axis direction through the acceleration sensor 130, and based therefrom, identify as the X-axis and the Y-axis forming angles of 0° and 90° with the direction of gravity acceleration, respectively.

According to another example, based on the X-axis of the electronic apparatus 100 forming a 45° with a floor surface, the processor 140 may obtain data having a size of $\frac{1}{\sqrt{2}}$ $(= \sin 45°)$ G in the X-axis direction and a size of $\frac{1}{\sqrt{2}}$ $(= \sin 45°)$ G in the Y-axis direction through the acceleration sensor 130, and based therefrom, identify as the X-axis and the Y-axis forming a 45° with the direction of gravity acceleration, respectively.

According to an embodiment, the processor 140 may identify the plurality of touch positions corresponding to touch data of greater than or equal to a threshold value from the display panel 110 based on a second sensing data obtained by the capacitive sensor 120. The second sensing data may include the amount of change in capacitance, and the amount of change in capacitance may be obtained based on an amount of change in distance magnitude between the capacitive sensor 120 and the body part which is in proximity and an amount of change in a size of the contact area between the sensor and the body part. The amount of change in capacitance may be inversely proportionate to the amount of change in distance magnitude and proportionate to the size of the contact area. The amount of change in capacitance may be obtained based on a magnitude of capacitance prior to the touch input of the user and the magnitude of capacitance corresponding to the touch input of the user. The touch input may be the contact type touch input or the non-contact type touch input, but will be described below assuming that it is the non-contact type touch input for convenience of description.

According to an example, the processor 140 may identify the plurality of touch positions corresponding to touch data of greater than or equal to the threshold value based on the amount of change in capacitance. The touch data may be data which can identify whether there is touch input obtained based on an amount of change in capacitance data. For example, the touch data may be capacitance data itself, or may be data normalizing capacitance data, data converted based on a pre-set reference value, and the like. For convenience of description, it will be described below assuming that touch data is capacitance itself.

Based on the capacitive sensor 120 being implemented as the capacitance panel disposed at the lower part of the display panel 110, the processor 140 may identify the plurality of touch positions at which the amount of change in capacitance is greater than or equal to the threshold value based on the amount of change in capacitance obtained by the capacitive sensor 120. According to an example, the processor 140 may identify all positions at which the amount of change in capacitance is greater than or equal to the threshold value as the plurality of touch positions, or identify only positions of a threshold coefficient (e.g., 2) from among a plurality of positions of greater than or equal to the threshold value as the plurality of touch positions. For example, in a latter case, a position having a peak value with the greatest amount of change in capacitance and a next peak value may be identified as the plurality of touch positions. The threshold value may be pre-stored in the memory (not shown) at an initial manufacturing stage, but may be set or changed according to a user command.

Then, the processor 140 may obtain coordinate information corresponding to the identified plurality of touch positions. The coordinate information may include an X-axis coordinate and a Y-axis coordinate.

According to an embodiment, the processor 140 may identify a touch position at a relatively upper side from among the plurality of touch positions as the touch position intended by the user based on the orientation information and the coordinate information corresponding to the respective touch positions. This is because the user may touch the position intended by oneself generally using a finger, and in this case, unintended capacitance may occur due to touching with a palm, a back of one's hand, and the like at a lower side area of the corresponding position, and an axis for determining an upper side position from among the axes (X-axis, Y-axis) corresponding to the coordinates corresponding to the touch position may vary according to an orientation of the electronic apparatus 100.

Accordingly, the processor 140 may determine an axis for determining the upper side position based on the orientation information, and identify an upper side touch position based on a coordinate value corresponding to the determined axis.

For example, the processor 140 may identify, based on information on an angle of which the respective axes form with the gravity acceleration direction, an axis value of an axis of which a magnitude of an angle formed with the direction of gravity acceleration is the smallest from among the plurality of axes. For example, the processor 140 may determine, based on the X-axis and the Y-axis being identified as forming angles of 90° and 0° respectively with the direction of gravity acceleration by the capacitive sensor 120, the Y-axis which has a small magnitude of an angle that is formed with the direction of gravity acceleration as the axis to determine the upper side position based on the above, and identify the upper side touch position based on the coordinate value corresponding to the determined Y-axis.

For example, the touch position corresponding to a relatively great Y-axis value from among the respective Y-axis coordinate values corresponding to the plurality of touch positions may be identified as the upper side touch position. For example, an absolute value of the identified at least one Y-axis value from among the coordinate values corresponding to the respective touch positions may be compared and the touch position at a relatively upper side from among the plurality of touch positions may be identified.

In another example, the processor 140 may determine, based on the X-axis and the Y-axis being identified as forming angles of 0° and 90° respectively with the direction of gravity acceleration by the capacitive sensor 120, the X-axis which has a relatively small magnitude of an angle that is formed with the direction of gravity acceleration as the axis to determine the upper side position based on the above, and identify the upper side touch position based on the coordinate value corresponding to the determined X-axis.

In another example, the processor 140 may determine, based on the X-axis and the Y-axis being identified as forming angles of 45° and 45° respectively with the direction of gravity acceleration by the capacitive sensor 120, both the X-axis and the Y-axis as axes to determine the upper side position.

According to an embodiment, the processor 140 may identify a disposition mode of the electronic apparatus 100 based on the orientation information, and decide the axis to determine the upper side position based on the identified mode.

According to an embodiment, the processor 140 may identify the electronic apparatus 100 to be in a horizontal mode or a vertical mode based on the orientation information. The horizontal mode may mean an image displayed by the display panel 110 being an image in a horizontal direction, and the horizontal direction image may mean an image in which a horizontal size (i.e., a size corresponding to the X-axis) is greater than a vertical size (i.e., a size corresponding to the Y-axis). The vertical mode may mean an image displayed by the display panel 110 being an image in a vertical direction, and the vertical direction image may mean an image in which the vertical size is greater than the horizontal size.

According to an example, the processor 140 may identify, based on a magnitude of an angle formed by the X-axis of the electronic apparatus 100 with the direction of gravity acceleration being identified as less than a threshold magnitude based on the obtained orientation information, the electronic apparatus 100 as in the vertical mode. In this case, the threshold magnitude may be 45°, but is not limited thereto.

For example, based on the threshold magnitude being 45°, the processor 140 may identify the electronic apparatus 100 to be in the vertical mode based on the angle formed by the X-axis of the electronic apparatus 100 and the direction of gravity acceleration being identified as 30° by the acceleration sensor 130.

According to an example, the processor 140 may identify, based on the magnitude of the angle formed by the X-axis of the electronic apparatus 100 with the direction of the gravity acceleration being identified as greater than or equal to the threshold magnitude based on the obtained orientation information, the electronic apparatus 100 as in the horizontal mode.

For example, based on the threshold magnitude being 45°, the processor 140 may identify the electronic apparatus 100 to be in the horizontal mode based on the angle formed by the X-axis of the electronic apparatus 100 and the direction of gravity acceleration being identified as 60° by the acceleration sensor 130.

According to an example, the processor 140 may identify, based on the electronic apparatus 100 being identified as in the horizontal mode based on the orientation information, a relatively upper side touch position from among the plurality of touch positions by comparing the Y-axis values from among the coordinate values corresponding to the respective touch positions.

For example, the processor 140 may identify, based on the electronic apparatus 100 being identified as in the horizontal mode due to the angle formed by the X-axis with the direction of gravity acceleration being identified as greater than or equal to the threshold magnitude by the acceleration sensor 130, the touch position at which a magnitude of the Y-axis value is relatively greater as the relatively upper side touch position by comparing the magnitude of the Y-axis value from among the coordinate values corresponding to the respective touch positions. In this case, the processor 140 may identify the relatively upper side touch position from among the plurality of touch positions by comparing a magnitude of the absolute value of the Y-axis value.

According to another example, the processor 140 may identify, based on the electronic apparatus 100 being identified as in the vertical mode based on the orientation information, the relatively upper side touch position from among the plurality of touch positions by comparing the X-axis value from among the coordinate values corresponding to the respective touch positions.

For example, the processor 140 may identify, based on the electronic apparatus 100 being identified as in the vertical mode due to the angle formed by the X-axis and the direction of gravity acceleration being identified as less than the threshold magnitude by the acceleration sensor 130, the touch position at which the magnitude of the X-axis value is relatively greater as the relatively upper side touch position by comparing the magnitude of the X-axis value from among the coordinate values corresponding to the respective touch positions. In this case, the processor 140 may identify the relatively upper side touch position from among the plurality of touch positions by comparing the magnitude of the absolute value of the X-axis value.

According to an embodiment, the processor 140 may identify, based on the electronic apparatus 100 being identified as tilted in a gravity direction in case the electronic apparatus 100 is not identified as in the horizontal mode of the vertical mode, the relatively upper side touch position from among the plurality of touch positions by comparing the absolute value for the identified at least one axis value from among the coordinate values corresponding to the respective touch positions.

The gravity direction may mean the gravity acceleration direction, and the processor 140 may identify a degree to which the electronic apparatus 100 is tilted in the gravity direction based on information on an angle formed by the X-axis with an axis (hereinafter, referred to as a gravity direction axis) parallel with the direction of gravity acceleration.

In addition, according to an example, the processor 140 may calculate, based on the electronic apparatus 100 being identified as tilted in the gravity direction, a gravity direction value (or a gravity direction height value or a first value or a second value) corresponding to the respective touch positions based on a square root value of a value in which the X-axis value and the Y-axis value are squared and summated from among the coordinate values corresponding to the plurality of touch positions, the orientation information of the electronic apparatus 100, and a ratio of the Y-axis value with respect to the X-axis value of the plurality of touch positions, and identify the touch position corresponding to a relatively great value from among a plurality of gravity direction values as the relatively upper side touch position.

The gravity direction value may mean an intercept value corresponding to the gravity direction axis, and specifically, may be calculated through an Math Figure 2 as described below.

【Math Figure 2】

$$H=\sqrt{x^2+y^2}\times\cos(\alpha-(\tan^{-1}\frac{y}{x}))$$

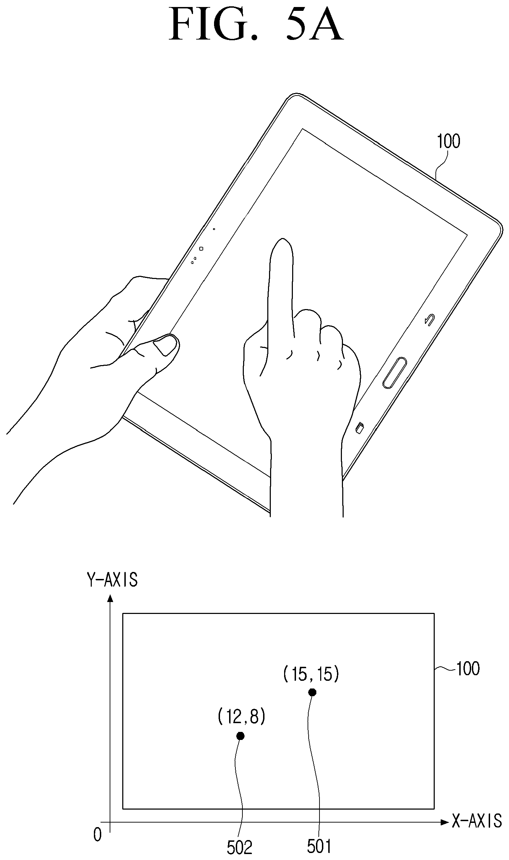

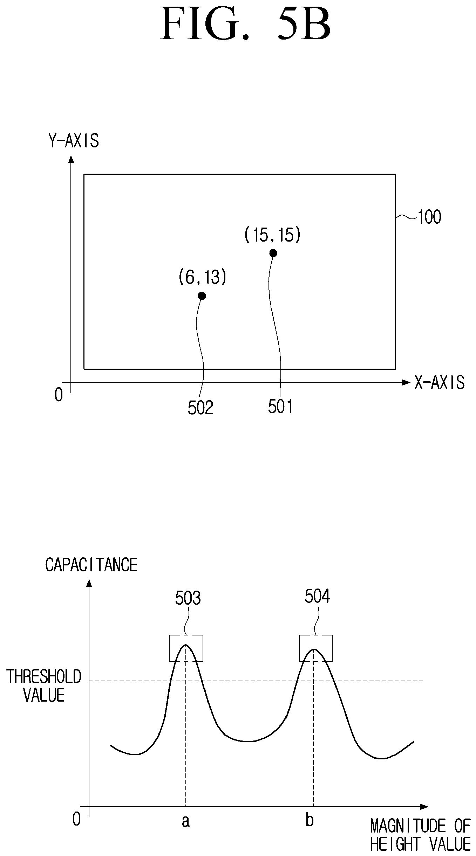

In Math Figure 2, $H$ represents the gravity direction value corresponding to the touch position, $x$ represent the X-axis value of the touch position, and $y$ represents the Y-axis value of the touch position. $\alpha$ represents an angle formed by the X-axis with the gravity direction axis, and the processor 140 may obtain $\alpha$ based on the orientation information obtained through the acceleration sensor 130. The processor 140 may calculate the gravity direction value $H$ of the respective touch positions through Math Figure 2, and identify the touch position corresponding to a relatively great value among therefrom as the relatively upper side touch position. The above will be described in detail through FIGS. 5A and 5B.

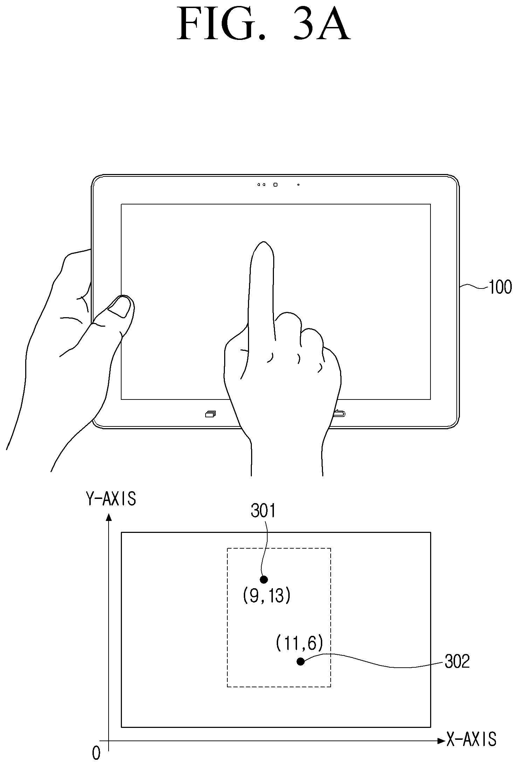

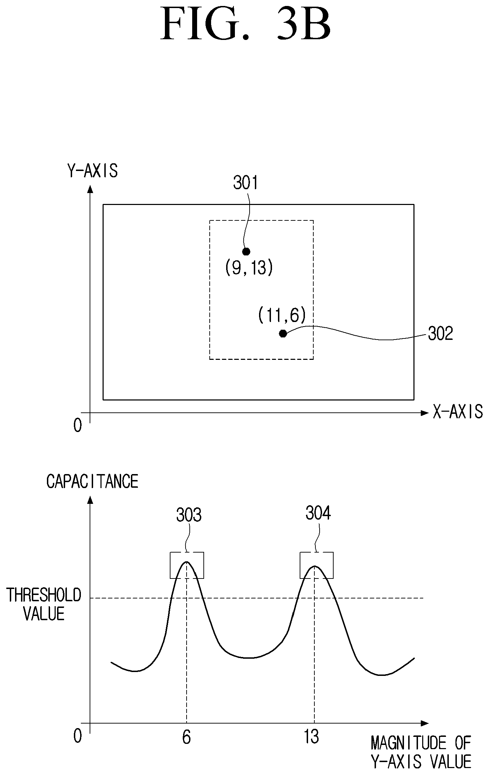

FIGS. 3A and 3B are diagrams illustrating an identification method of a touch position at a relatively upper side from a horizontal mode according to various embodiments of the disclosure.

Referring to FIGS. 3A and 3B, the processor 140 may identify that the magnitude of the angle formed by the X-axis of the electronic apparatus 100 with the direction of gravity acceleration is 90° which is greater than or equal to a pre-set threshold magnitude of 45° based on the first sensing data obtained by the acceleration sensor 130, and identify that the electronic apparatus 100 is in the horizontal mode.

In addition, based on there being a touch input of the user, the processor 140 of the electronic apparatus 100 may identify the plurality of touch positions 301 and 302 corresponding to touch data of greater than or equal to the threshold magnitude based on the second sensing data obtained by the capacitive sensor 120. The processor 140 may identify a first touch position 301 corresponding to a second finger of the user and a second touch position 302 corresponding to the remaining fingers of the user, and based therefrom, obtain the coordinate information of the respective touch positions. The processor 140 may obtain the coordinate information based on the distance magnitude between the plurality of touch positions and the respective axes, and the magnitude of the coordinate value may be a relative value corresponding to the distance magnitude between the respective touch positions and an axis. Accordingly, the processor 140 may identify the coordinate values of the first and second touch positions 301 and 302 as (9,13) and (11,6), respectively.

Then, the processor 140 may identify the Y-axis values (6 and 13 respectively) corresponding to the coordinate values of touch positions 301 and 302 of the identified plurality of touch positions according to the electronic apparatus 100 being identified as in the horizontal mode. Accordingly, the processor 140 may identify the first touch position 301 which is relatively greater in the size of Y-axis value corresponding to the respective touch positions, and perform an operation corresponding to the identified first touch position.

Referring to FIGS. 3A and 3B, the processor 140 may identify the touch position intended by the user even when the position at which the size of capacitance is greater than or equal to a pre-set threshold value is in plurality 303 and 304, and user satisfaction may be enhanced as a rate of error in touch is reduced accordingly.

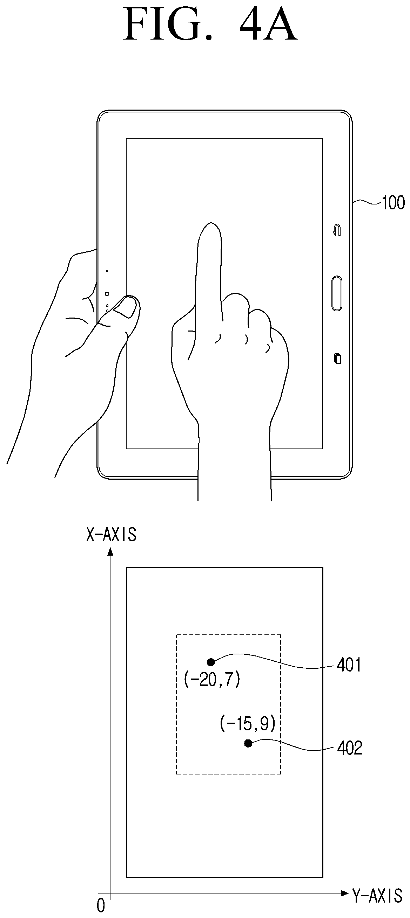

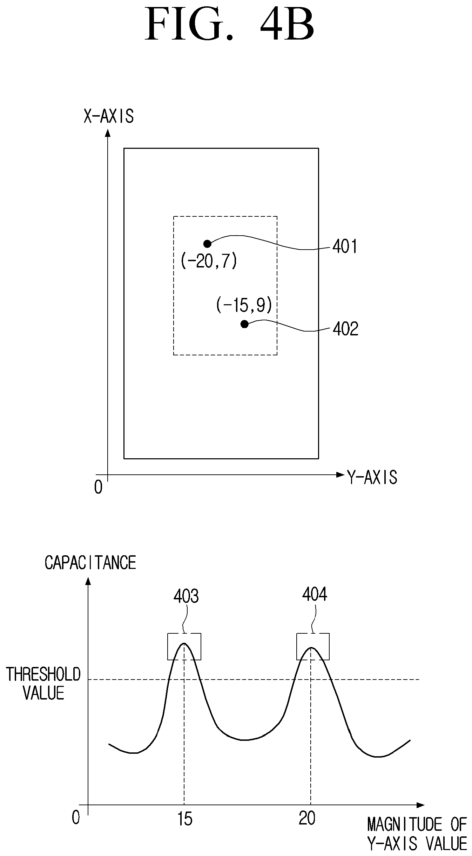

FIGS. 4A and 4B are diagrams illustrating an identification method of a touch position at a relatively upper side from the vertical mode according to various embodiments of the disclosure.

Referring to FIGS. 4A and 4B, the processor 140 may identify that the magnitude of the angle formed by the X-axis of the electronic apparatus 100 with the direction of gravity acceleration is 0° which is less than 45° which is the pre-set threshold magnitude based on the first sensing data obtained by the acceleration sensor 130, and identify that the electronic apparatus 100 is in the vertical mode.

In addition, based on there being the touch input of the user, the processor 140 of the electronic apparatus 100 may identify the plurality of touch positions 401 and 402 corresponding to touch data of greater than or equal to the threshold value based on the second sensing data obtained by the capacitive sensor 120. The processor 140 may identify the first touch position 401 corresponding to the second finger of the user and the second touch position 402 corresponding to the remaining fingers of the user, and based therefrom, obtain the coordinate information of the respective touch positions. Accordingly, the processor 140 may identify the coordinate values of the first and second touch positions 401 and 402 as (-20,7) and (-15,9), respectively.

Then, the processor 140 may identify the respective absolute values 20 and 15 of the X-axis value corresponding to the coordinate values of touch positions 401 and 402 of the identified plurality of touch positions according to the electronic apparatus 100 being identified as in the vertical mode. Accordingly, the processor 140 may identify the first touch position 401 which is relatively greater than the size of the Y-axis value corresponding to the respective touch positions, and perform an operation corresponding to the identified first touch position.

Referring to FIGS. 4A and 4B, the processor 140 may accurately identify the touch position intended by the user even when the position at which the magnitude of capacitance is greater than or equal to the pre-set threshold value is in plurality 403 and 404.

FIGS. 5A and 5B are diagrams illustrating an identification method of a touch position at a relatively upper side according to various embodiments of the disclosure.

Referring to FIGS. 5A and 5B, the processor 140 may identify that the magnitude of the angle 510 formed by the X-axis of the electronic apparatus 100 with the gravity direction axis is 50° which is within a pre-set threshold range (greater than or equal to 30° and less than 60°) based on the first sensing data obtained by the acceleration sensor 130.

In addition, based on there being the touch input of the user, the processor 140 of the electronic apparatus 100 may identify the plurality of touch positions 501 and 502 corresponding to touch data of greater than or equal to the threshold value based on the second sensing data obtained by the capacitive sensor 120. The processor 140 may identify the touch position 501 corresponding to the second finger of the user and the touch position 502 corresponding to the remaining fingers of the user, and based therefrom, obtain the coordinate information of the respective touch positions. The processor 140 may obtain the coordinate information based on the distance magnitude between the plurality of touch positions and the respective axes, and the magnitude of the coordinate value may be a relative value corresponding to the distance magnitude between the respective touch positions and an axis. Accordingly, the processor 140 may identify the coordinate values of the respective positions 501 and 502 as (15,15) and (12,8), respectively.

Then, the processor 140 may calculate, based on it being identified that the electronic apparatus 100 is tilted in the gravity direction according to the magnitude of the angle 510 formed by the X-axis with the gravity direction axis being 50° which is within the pre-set threshold range, the gravity direction values (a and b) corresponding to the respective touch positions.

In this case, the processor 140 may calculate the gravity direction value corresponding to the respective touch positions based on Math Figure 2. Specifically, the processor 140 may calculate the gravity direction value b of the first touch position 501 as described below.

【Math Figure 3】

$$b = \sqrt{15^2 + 15^2} \times \cos(50° - (\tan^{-1}\frac{15}{15})) \approx 21.13$$

Here, the square root value may represent a straight-line distance from an original point of a coordinate corresponding to 501, and a cosine value may represent a cosine value on an angle $\theta_2'$ of coordinates (15,15) corresponding to 501 with the gravity direction axis which is formed by the straight-line which connects the original point. The magnitude of $\theta_2'$ may represent a value in which a magnitude of an angle $\theta_2$ between the above-described straight-line and the X-axis is subtracted from the magnitude of the angle 510 formed by the X-axis and the gravity direction axis.

Likewise, the processor 140 may calculate the gravity direction value a of the second touch position 502 as described below.

【Math Figure 4】

$$a = \sqrt{12^2 + 8^2} \times \cos(50° - (\tan^{-1}\frac{8}{12})) \approx 13.83$$

Accordingly, the processor 140 may compare the calculated plurality of gravity direction values a and b, identify the touch position 501 corresponding to the relatively greater b as the relatively upper side touch position, and perform an operation corresponding to the identified touch position 501.

Referring to FIGS. 5A and 5B, in case of the electronic apparatus 100 not being identified as in the horizontal mode or the vertical mode, the processor 140 may identify the touch position intended by the user even when the position at which the magnitude of capacitance is greater than or equal to the pre-set threshold value is in plurality 503 and 504, and user satisfaction may be enhanced as the rate of error in touch is reduced accordingly.

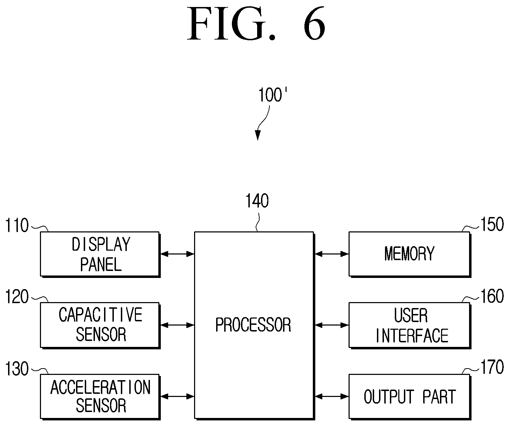

FIG. 6 is a diagram illustrating a detailed configuration of an electronic apparatus according to an embodiment of the disclosure.

Referring to FIG. 6, an electronic apparatus 100' may include a display panel 110, the capacitive sensor 120, the acceleration sensor 130, the processor 140, a memory 150, a user interface 160 and an output part 170. The detailed description of configurations overlapping with the configurations shown in FIG. 2 from among the configurations shown in FIG. 6 will be omitted.

The memory 150 may store data necessary for the various embodiments of the disclosure. The memory 150 may be implemented in the form of a memory embedded in the electronic apparatus 100' according to a data storage use, or implemented in the form of a memory attachable to and detachable from the electronic apparatus 100'. For example, data for operating the electronic apparatus 100' may be stored in a memory embedded in the electronic apparatus 100', and data for an expansion function of the electronic apparatus 100' may be stored in a memory attachable to and detachable from the electronic apparatus 100'. The memory embedded in the electronic apparatus 100' may be implemented as at least one from among a volatile memory (e.g., a dynamic random access memory (DRAM), a static RAM (SRAM), or a synchronous dynamic RAM (SDRAM)), or a non-volatile memory (e.g., one time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard disk drive (HDD) or a solid state drive (SSD)). In addition, in the case of a memory which is attachable to and detachable from the electronic apparatus 100', the memory may be implemented in the form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

The user interface 160 may be a configuration for the electronic apparatus 100' to perform an interaction with the user. For example, the user interface 160 may include at least one from among a touch sensor, a motion sensor, a button, a jog dial, a switch, a microphone, or a speaker, but is not limited thereto.

The output part 170 may include the speaker, a vibration generating part, and the like, and is not limited thereto, and may be formed into various embodiments which transfers information in a form that may be sensed by five senses of the user.

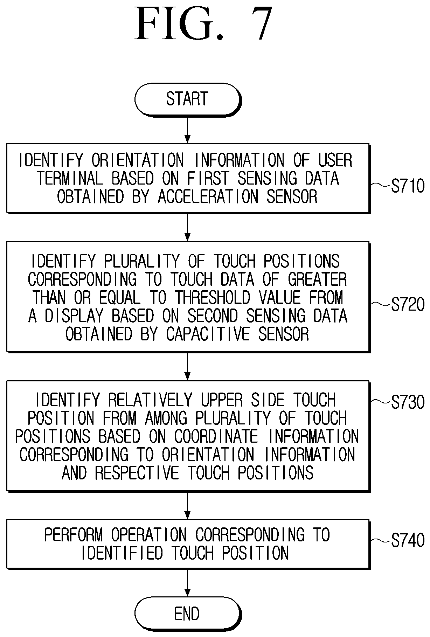

FIG. 7 is a flowchart illustrating a control method of an electronic apparatus according to an embodiment of the disclosure.

Referring to FIG. 7, according to the control method of the electronic apparatus, first, the orientation information of the electronic apparatus may be identified based on the first sensing data obtained by the acceleration sensor (S710).

Then, the plurality of touch positions corresponding to touch data of greater than or equal to the threshold value may be identified from the display based on the second sensing data obtained by the capacitive sensor (S720). In addition, the capacitive sensor may be implemented as a capacitance panel disposed at the lower part of the display panel, or implemented as a plurality of capacitive sensors disposed spaced apart from one another at the lower part of the display panel.

Then, the relatively upper side touch position from among the plurality of touch positions may be identified based on the coordinate information corresponding to the orientation information and the respective touch positions (S730).

Then, an operation corresponding to the identified touch position may be performed (S740).

Here, the coordinate information corresponding to the respective touch positions may include the X-axis value and the Y-axis value. In this case, in operation S730, at least one axis from among the X-axis and the Y-axis may be identified based on the orientation information, and the relatively upper side touch position from among the plurality of touch positions may be identified by comparing the axis value corresponding to the identified axis from the coordinate values corresponding to the respective touch positions.

In this case, in operation S730, based on the electronic apparatus being identified as in the horizontal mode based on the orientation information, the relatively upper side touch position from among the plurality of touch positions may be identified by comparing the Y-axis value from among the coordinate values corresponding to the respective touch positions. Alternatively, in operation S730, based on the electronic apparatus being identified as in the vertical mode based on the orientation information, the relatively upper side touch position from among the plurality of touch positions may be identified by comparing the X-axis value from among the coordinate values corresponding to the respective touch positions.

In operation S730, based on the electronic apparatus being identified as in the horizontal mode, the touch position at which the magnitude of the Y-axis value is relatively great may be identified as the relatively upper side touch position by comparing the magnitude of the Y-axis value from among the coordinate values corresponding to the respective touch positions. Alternatively, in operation S730, based on the electronic apparatus being identified as in the vertical mode, the touch position at which the magnitude of the X-axis value is relatively great may be identified as the relatively upper side touch position by comparing the magnitude of X-axis value from among the coordinate values corresponding to the respective touch positions.

In addition, in operation S730, at least one axis from among the X-axis and the Y-axis may be identified based on the orientation information, and the relatively upper side touch position from among the plurality of touch positions may be identified by comparing the absolute value of the value corresponding to the identified at least one axis from among the coordinate values corresponding to the respective touch positions.

Here, in operation S730, based on the electronic apparatus being identified as tilted in the gravity direction, the relatively upper side touch position from among the plurality of touch positions may be identified by comparing the absolute value of the identified plurality of axis values from among the coordinate values corresponding to the respective touch positions.

Here. In operation S730, the touch position corresponding to the relatively great value may be identified as the relatively upper side touch position by comparing a square root value of a value in which the X-axis value and the Y-axis value are squared and summated from among the coordinate values corresponding to the first touch position and a square root value of a value in which the X-axis value and the Y-axis value are squared and summated from among the coordinate values corresponding to the second touch position.

In addition, in operation S720, based on the non-contact type touch input being received, the plurality of touch positions corresponding to touch data of greater than or equal to the threshold value may be identified in the display based on the second sensing data.

According to the various embodiments of the disclosure, the touch position intended by the user from among the plurality of touch positions may be accurately identified taking into consideration the orientation information and information on the touch position of the electronic apparatus. Accordingly, user convenience may be enhanced.

In addition, the methods according to the various embodiments of the disclosure described above may be implemented with only a software upgrade or a hardware upgrade with respect to electronic apparatuses of the related art.

In addition, the various embodiments of the disclosure described above may be implemented through an embedded server provided in an electronic apparatus, or through an external server of an electronic apparatus.

According to an embodiment of the disclosure, the various embodiments described above may be implemented with software including instructions stored in a machine-readable storage media (e.g., computer). The machine may call an instruction stored in the storage medium, and as a device capable of operating according to the called instruction, may include an electronic apparatus (e.g., electronic apparatus (A)) according to the above-mentioned embodiments. Based on the instruction being executed by the processor, the processor may directly or using other elements under the control of the processor perform a function corresponding to the instruction. The instruction may include a code generated by a compiler or executed by an interpreter. The machine-readable storage medium may be provided in the form of a non-transitory storage medium. Herein, 'non-transitory' merely means that the storage medium is tangible and does not include a signal, and the term does not differentiate data being semi-permanently stored or being temporarily stored in the storage medium.

In addition, according to an embodiment of the disclosure, a method according to the various embodiments described above may be provided included a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE™). In the case of online distribution, at least a portion of the computer program product may be at least stored temporarily in a storage medium such as a server of a manufacturer, a server of an application store, or a memory of a relay server, or temporarily generated.

In addition, the respective elements (e.g., a module or a program) according to the various embodiments described above may be formed as a single entity or a plurality of entities, and some sub-elements from among the abovementioned corresponding sub-elements may be omitted, or different sub-elements may be further included in the various embodiments. Alternatively or additionally, some elements (e.g., modules or programs) may be integrated into one entity to perform the same or similar functions performed by the respective corresponding elements prior to integration. Operations performed by a module, a program, or another element, in accordance with various embodiments, may be performed sequentially, in a parallel, repetitively, or in a heuristic manner, or at least some operations may be executed in a different order, omitted or a different operation may be added.

## Claims

1. An electronic apparatus, comprising:

   a display panel (110);
   a capacitive sensor (120) disposed underneath the display panel (110);
   an acceleration sensor (130); and
   a processor (140),
   wherein the processor (140) is configured to:

   identify orientation information of the electronic apparatus based on first sensing data obtained by the acceleration sensor (130),
   identify a plurality of touch positions corresponding to touch data of greater than or equal to a threshold value in the display panel (110) based on second sensing data obtained by the capacitive sensor (120),
   obtain coordinate information corresponding to the identified plurality of touch positions, the coordinate information corresponding to the respective touch positions comprising an X-axis value and a Y-axis value,
   identify at least one axis from among the X-axis or the Y-axis based on the orientation information,
   identify a relatively upper side touch position from among the plurality of touch positions by comparing an axis value corresponding to the identified axis from among coordinate values corresponding to the respective touch positions, and
   perform an operation corresponding to the identified relatively upper side touch position.

2. The electronic apparatus of claim 1, wherein the processor (140) is further configured to:

   identify, based on the electronic apparatus being identified as in a horizontal mode based on the orientation information, the relatively upper side touch position from among the plurality of touch positions by comparing the Y-axis value from among the coordinate values corresponding to the respective touch positions, and
   identify, based on the electronic apparatus being identified as in a vertical mode based on the orientation information, the relatively upper side touch position from among the plurality of touch positions by comparing the X-axis value from among the coordinate values corresponding to the respective touch positions.

3. The electronic apparatus of claim 2, wherein the processor (140) is further configured to:

   identify, based on the electronic apparatus being identified as in the horizontal mode, a touch position at which a magnitude of the Y-axis value is relatively greater as the relatively upper side touch position by comparing the magnitude of the Y-axis value from among the coordinate values corresponding to the respective touch positions, and
identify, based on the electronic apparatus being identified as in the vertical mode, a touch position at which a magnitude of the X-axis value is relatively greater as the relatively upper side touch position by comparing the magnitude of the X-axis value from among the coordinate values corresponding to the respective touch positions.

4. The electronic apparatus of claim 1,
wherein the processor (140) is further configured to:
identify the relatively upper side touch position from among the plurality of touch positions by comparing an absolute value of an axis value corresponding to the identified at least one axis from among coordinate values corresponding to the respective touch positions.

5. The electronic apparatus of claim 4, wherein the processor (140) is further configured to:
identify, based on the electronic apparatus being identified as tilted in a gravity direction, the relatively upper side touch position from among the plurality of touch positions by comparing the absolute value of the identified at least one axis value from among the coordinate values corresponding to the respective touch positions.

6. The electronic apparatus of claim 5, wherein the processor (140) is further configured to:

calculate a first value corresponding to the gravity direction based on a square root value of a value in which the X-axis value and the Y-axis value are squared and summated from among the coordinate values corresponding to a first touch position, the orientation information, and a ratio of the Y-axis value with respect to the X-axis value of the first touch position,
calculate a second value corresponding to the gravity direction based on a square root value of a value in which the X-axis value and the Y-axis value are squared and summated from among the coordinate values corresponding to a second touch position, the orientation information, and a ratio of the Y-axis value with respect to the X-axis value of the second touch position, and
identify a touch position corresponding to a relatively great value from among the first value and the second value as the relatively upper side touch position.

7. The electronic apparatus of claim 1,

wherein the capacitive sensor (120) is implemented as a capacitance panel disposed underneath the display panel (110), or
wherein the capacitive sensor (120) is implemented as a plurality of capacitive sensor (120)s disposed spaced apart from one another underneath the display panel (110).

8. The electronic apparatus of claim 1, wherein the processor (140) is configured to:
identify, based on a non-contact type touch input being received, the plurality of touch positions corresponding to touch data of greater than or equal to a threshold value in the display panel (110) based on the second sensing data.

9. A control method of an electronic apparatus, the control method comprising:

identifying orientation information of the electronic apparatus based on first sensing data obtained by an acceleration sensor (130);
identifying a plurality of touch positions corresponding to touch data of greater than or equal to a threshold value in a display panel (110) based on second sensing data obtained by a capacitive sensor (120);
obtaining coordinate information corresponding to the identified plurality of touch positions, the coordinate information corresponding to the respective touch positions comprising an X-axis value and a Y-axis value;
identifying at least one axis from among the X-axis or the Y-axis based on the orientation information;
identifying a relatively upper side touch position from among the plurality of touch positions by comparing an axis value corresponding to the identified axis from among coordinate values corresponding to the respective touch positions; and
performing an operation corresponding to the identified relatively upper side touch position.

10. The control method of claim 9, wherein the identifying the relatively upper side touch position comprises:

identifying, based on the electronic apparatus being identified as in a horizontal mode based on the orientation information, the relatively upper side touch position from among the plurality of touch positions by comparing the Y-axis value from among the coordinate values corresponding to the respective touch positions; and identifying, based on the electronic apparatus being identified as in a vertical mode based on the orientation information, the relatively upper side touch position from among the plurality of touch positions by comparing the X-axis value from among the coordinate values corresponding to the respective touch positions.

11. The control method of claim 10, wherein the identifying the relatively upper side touch position comprises:

identifying, based on the electronic apparatus being identified as in the horizontal mode, a touch position at which a magnitude the Y-axis value is relatively great as the relatively upper side touch position by comparing the magnitude of the Y-axis value from among the coordinate values corresponding to the respective touch positions; and
identifying, based on the electronic apparatus being identified as in the vertical mode, a touch position at which a magnitude the X-axis value is relatively great as the relatively upper side touch position by comparing the magnitude of the X-axis value from among the coordinate values corresponding to the respective touch positions.

12. The control method of claim 9,
wherein the identifying the relatively upper side touch position comprises:
identifying, the relatively upper side touch position from among the plurality of touch positions by comparing an absolute value of a value corresponding to the identified at least one axis from among coordinate values corresponding to the respective touch positions.

13. A non-transitory computer readable recording medium storing computer instructions for an electronic apparatus to perform an operation based on being executed by a processor (140) of the electronic apparatus, the operation comprising:

identifying orientation information of the electronic apparatus based on first sensing data obtained by an acceleration sensor (130);
identifying a plurality of touch positions corresponding to touch data of greater than or equal to a threshold value in a display panel (110) based on second sensing data obtained by a capacitive sensor (120);
obtaining coordinate information corresponding to the identified plurality of touch positions, the coordinate information corresponding to the respective touch positions comprising an X-axis value and a Y-axis value;
identifying at least one axis from among the X-axis or the Y-axis based on the orientation information;
identifying a relatively upper side touch position from among the plurality of touch positions by comparing an axis value corresponding to the identified axis from among coordinate values corresponding to the respective touch positions; and
performing an operation corresponding to the identified relatively upper side touch position.

**Patentansprüche**

1. Elektronische Vorrichtung, umfassend:

eine Anzeigetafel (110);
einen kapazitiven Sensor (120), der unterhalb der Anzeigetafel (110) angeordnet ist;
einen Beschleunigungssensor (130); und
einen Prozessor (140),
wobei der Prozessor (140) konfiguriert ist zum:

Identifizieren von Ausrichtungsinformationen der elektronischen Vorrichtung basierend auf ersten Erfassungsdaten, die durch den Beschleunigungssensor (130) erhalten werden,
Identifizieren einer Vielzahl von Berührungspositionen, die Berührungsdaten größer oder gleich einem Schwellenwert entsprechen, in der Anzeigetafel (110) basierend auf zweiten Erfassungsdaten, die durch den kapazitiven Sensor (120) erhalten werden,
Erhalten von Koordinateninformationen, die der identifizierten Vielzahl von Berührungspositionen entsprechen, wobei die Koordinateninformationen, die den jeweiligen Berührungspositionen entsprechen, einen X-Achsen-Wert und einen Y-Achsen-Wert umfassen,
Identifizieren mindestens einer Achse aus der X-Achse oder der Y-Achse basierend auf den Ausrichtungsinformationen,

Identifizieren einer Berührungsposition auf einer relativ gesehen oberen Seite aus der Vielzahl von Berührungspositionen durch Vergleichen eines Achsenwerts, der der identifizierten Achse entspricht, aus Koordinatenwerten, die den jeweiligen Berührungspositionen entsprechen, und

Durchführen eines Vorgangs, der der identifizierten Berührungsposition auf der relativ gesehen oberen Seite entspricht.

2. Elektronische Vorrichtung nach Anspruch 1, wobei der Prozessor (140) ferner konfiguriert ist zum:

Identifizieren, basierend darauf, dass die elektronische Vorrichtung basierend auf den Ausrichtungsinformationen als in einem Horizontalmodus identifiziert wird, der Berührungsposition auf der relativ gesehen oberen Seite aus der Vielzahl von Berührungspositionen durch Vergleichen des Y-Achsen-Werts aus den Koordinatenwerten, die den jeweiligen Berührungspositionen entsprechen, und

Identifizieren, basierend darauf, dass die elektronische Vorrichtung basierend auf den Ausrichtungsinformationen als in einem Vertikalmodus identifiziert wird, der Berührungsposition auf der relativ gesehen oberen Seite aus der Vielzahl von Berührungspositionen durch Vergleichen des X-Achsen-Werts aus den Koordinatenwerten, die den jeweiligen Berührungspositionen entsprechen.

3. Elektronische Vorrichtung nach Anspruch 2, wobei der Prozessor (140) ferner konfiguriert ist zum:

Identifizieren, basierend darauf, dass die elektronische Vorrichtung als in dem Horizontalmodus identifiziert wird, einer Berührungsposition, bei der ein Betrag des Y-Achsen-Werts relativ größer ist, als die Berührungsposition auf der relativ gesehen oberen Seite durch Vergleichen des Betrags des Y-Achsen-Werts aus den Koordinatenwerten, die den jeweiligen Berührungspositionen entsprechen, und

Identifizieren, basierend darauf, dass die elektronische Vorrichtung als in dem Vertikalmodus identifiziert wird, einer Berührungsposition, bei der ein Betrag des X-Achsen-Werts relativ größer ist, als die Berührungsposition auf der relativ gesehen oberen Seite durch Vergleichen des Betrags des X-Achsen-Werts aus den Koordinatenwerten, die den jeweiligen Berührungspositionen entsprechen.

4. Elektronische Vorrichtung nach Anspruch 1,
wobei der Prozessor (140) ferner konfiguriert ist zum:
Identifizieren der Berührungsposition auf der relativ gesehen oberen Seite aus der Vielzahl von Berührungspositionen durch Vergleichen eines absoluten Werts eines Achsenwerts, der der identifizierten mindestens einen Achse entspricht, aus Koordinatenwerten, die den jeweiligen Berührungspositionen entsprechen.

5. Elektronische Vorrichtung nach Anspruch 4, wobei der Prozessor (140) ferner konfiguriert ist zum:
Identifizieren, basierend darauf, dass die elektronische Vorrichtung als in einer Gravitationsrichtung geneigt identifiziert wird, der Berührungsposition auf der relativ gesehen oberen Seite aus der Vielzahl von Berührungspositionen durch Vergleichen des absoluten Werts des identifizierten mindestens einen Achsenwerts aus den Koordinatenwerten, die den jeweiligen Berührungspositionen entsprechen.

6. Elektronische Vorrichtung nach Anspruch 5, wobei der Prozessor (140) ferner konfiguriert ist zum:

Berechnen eines ersten Werts, der der Gravitationsrichtung entspricht, basierend auf einem Quadratwurzelwert eines Werts, bei dem der X-Achsen-Wert und der Y-Achsen-Wert quadriert und summiert werden, aus den Koordinatenwerten, die einer ersten Berührungsposition entsprechen, den Ausrichtungsinformation und einem Verhältnis des Y-Achsen-Werts in Bezug auf den X-Achsen-Wert der ersten Berührungsposition,

Berechnen eines zweiten Werts, der der Gravitationsrichtung entspricht, basierend auf einem Quadratwurzelwert eines Werts, bei dem der X-Achsen-Wert und der Y-Achsen-Wert quadriert und summiert werden, aus den Koordinatenwerten, die einer zweiten Berührungsposition entsprechen, den Ausrichtungsinformation und einem Verhältnis des Y-Achsen-Werts in Bezug auf den X-Achsen-Wert der zweiten Berührungsposition, und

Identifizieren einer Berührungsposition, die einem relativ großen Wert aus dem ersten Wert und dem zweiten Wert entspricht, als die Berührungsposition auf der relativ gesehen oberen Seite.

7. Elektronische Vorrichtung nach Anspruch 1,

wobei der kapazitive Sensor (120) als eine Kapazitätstafel umgesetzt ist, die unterhalb der Anzeigetafel (110) angeordnet ist, oder
wobei der kapazitive Sensor (120) als eine Vielzahl von kapazitiven Sensoren (120) umgesetzt ist, die voneinander beabstandet unterhalb der Anzeigetafel (110) angeordnet sind.

8. Elektronische Vorrichtung nach Anspruch 1, wobei der Prozessor (140) konfiguriert ist zum:
Identifizieren, basierend darauf, dass eine berührungslose Eingabe empfangen wird, der Vielzahl von Berührungspositionen, die Berührungsdaten entsprechen, die größer oder gleich einem Schwellenwert sind, in der Anzeigetafel (110) basierend auf den zweiten Erfassungsdaten.

9. Steuerverfahren einer elektronischen Vorrichtung, wobei das Steuerverfahren Folgendes umfasst:

Identifizieren von Ausrichtungsinformationen der elektronischen Vorrichtung basierend auf ersten Erfassungsdaten, die durch einen Beschleunigungssensor (130) erhalten werden;
Identifizieren einer Vielzahl von Berührungspositionen, die Berührungsdaten größer oder gleich einem Schwellenwert entsprechen, in einer Anzeigetafel (110) basierend auf zweiten Erfassungsdaten, die durch einen kapazitiven Sensor (120) erhalten werden;
Erhalten von Koordinateninformationen, die der identifizierten Vielzahl von Berührungspositionen entsprechen, wobei die Koordinateninformationen, die den jeweiligen Berührungspositionen entsprechen, einen X-Achsen-Wert und einen Y-Achsen-Wert umfassen;
Identifizieren mindestens einer Achse aus der X-Achse oder der Y-Achse basierend auf den Ausrichtungsinformationen;
Identifizieren einer Berührungsposition auf einer relativ gesehen oberen Seite aus der Vielzahl von Berührungspositionen durch Vergleichen eines Achsenwerts, der der identifizierten Achse entspricht, aus Koordinatenwerten, die den jeweiligen Berührungspositionen entsprechen; und
Durchführen eines Vorgangs, der der identifizierten Berührungsposition auf der relativ gesehen oberen Seite entspricht.

10. Steuerverfahren nach Anspruch 9, wobei das Identifizieren der Berührungsposition auf der relativ gesehen oberen Seite Folgendes umfasst:

Identifizieren, basierend darauf, dass die elektronische Vorrichtung basierend auf den Ausrichtungsinformationen als in einem Horizontalmodus identifiziert wird, der Berührungsposition auf der relativ gesehen oberen Seite aus der Vielzahl von Berührungspositionen durch Vergleichen des Y-Achsen-Werts aus den Koordinatenwerten, die den jeweiligen Berührungspositionen entsprechen; und
Identifizieren, basierend darauf, dass die elektronische Vorrichtung basierend auf den Ausrichtungsinformationen als in einem Vertikalmodus identifiziert wird, der Berührungsposition auf der relativ gesehen oberen Seite aus der Vielzahl von Berührungspositionen durch Vergleichen des X-Achsen-Werts aus den Koordinatenwerten, die den jeweiligen Berührungspositionen entsprechen.

11. Steuerverfahren nach Anspruch 10, wobei das Identifizieren der Berührungsposition auf der relativ gesehen oberen Seite Folgendes umfasst:

Identifizieren, basierend darauf, dass die elektronische Vorrichtung als in dem Horizontalmodus identifiziert wird, einer Berührungsposition, bei der ein Betrag des Y-Achsen-Werts relativ groß ist, die Berührungsposition auf der relativ gesehen oberen Seite durch Vergleichen des Betrags des Y-Achsen-Werts aus den Koordinatenwerten, die den jeweiligen Berührungspositionen entsprechen; und
Identifizieren, basierend darauf, dass die elektronische Vorrichtung als in dem Vertikalmodus identifiziert wird, einer Berührungsposition, bei der ein Betrag des X-Achsen-Werts relativ groß ist, als die Berührungsposition auf der relativ gesehen oberen Seite durch Vergleichen des Betrags des X-Achsen-Werts aus den Koordinatenwerten, die den jeweiligen Berührungspositionen entsprechen.

12. Steuerverfahren nach Anspruch 9,
wobei das Identifizieren der Berührungsposition auf der relativ gesehen oberen Seite Folgendes umfasst:
Identifizieren der Berührungsposition auf der relativ gesehen oberen Seite aus der Vielzahl von Berührungspositionen durch Vergleichen eines absoluten Werts eines Werts, der der identifizierten mindestens einen Achse entspricht, aus Koordinatenwerten, die den jeweiligen Berührungspositionen entsprechen.

13. Nicht transitorisches computerlesbares Aufzeichnungsmedium, das Computeranweisungen für eine elektronische Vorrichtung speichert, um einen Vorgang basierend auf ihrer Ausführung durch einen Prozessor (140) der elektronischen Vorrichtung durchzuführen, wobei der Vorgang Folgendes umfasst:

Identifizieren von Ausrichtungsinformationen der elektronischen Vorrichtung basierend auf ersten Erfassungsdaten, die durch einen Beschleunigungssensor (130) erhalten werden;

Identifizieren einer Vielzahl von Berührungspositionen, die Berührungsdaten größer oder gleich einem Schwellenwert entsprechen, in einer Anzeigetafel (110) basierend auf zweiten Erfassungsdaten, die durch einen kapazitiven Sensor (120) erhalten werden;

Erhalten von Koordinateninformationen, die der identifizierten Vielzahl von Berührungspositionen entsprechen, wobei die Koordinateninformationen, die den jeweiligen Berührungspositionen entsprechen, einen X-Achsen-Wert und einen Y-Achsen-Wert umfassen;

Identifizieren mindestens einer Achse aus der X-Achse oder der Y-Achse basierend auf den Ausrichtungsinformationen;

Identifizieren einer Berührungsposition auf einer relativ gesehen oberen Seite aus der Vielzahl von Berührungspositionen durch Vergleichen eines Achsenwerts, der der identifizierten Achse entspricht, aus Koordinatenwerten, die den jeweiligen Berührungspositionen entsprechen; und

Durchführen eines Vorgangs, der der identifizierten Berührungsposition auf der relativ gesehen oberen Seite entspricht.

## Revendications

1. Dispositif électronique, comprenant :

    un panneau d'affichage (110) ;
    un capteur capacitif (120) disposé sous le panneau d'affichage (110) ;
    un capteur d'accélération (130) ; et
    un processeur (140),
    dans lequel le processeur (140) est configuré pour :

        identifier les informations d'orientation du dispositif électronique en se basant sur les premières données de détection obtenues par le capteur d'accélération (130),
        identifier une pluralité de positions tactiles correspondant à des données tactiles supérieures ou égales à une valeur seuil dans le panneau d'affichage (110) en se basant sur les secondes données de détection obtenues par le capteur capacitif (120),
        obtenir des informations de coordonnées correspondant à la pluralité de positions tactiles identifiées, les informations de coordonnées correspondant aux positions tactiles respectives comprenant une valeur de l'axe X et une valeur de l'axe Y,
        identifier au moins un axe parmi l'axe X ou l'axe Y sur la base des informations d'orientation,
        identifier une position tactile relative du côté supérieur parmi la pluralité de positions tactiles en comparant une valeur d'axe correspondant à l'axe identifié parmi les valeurs de coordonnées correspondant aux positions tactiles respectives, et
        réaliser une opération correspondant à la position tactile relative du côté supérieure identifiée.

2. Dispositif électronique de la revendication 1, dans lequel le processeur (140) est en outre configuré pour :

    identifier, en se basant sur le fait que le dispositif électronique est identifié comme étant dans un mode horizontal sur la base des informations d'orientation, la position tactile relative du côté supérieure parmi la pluralité de positions tactiles en comparant la valeur de l'axe Y parmi les valeurs de coordonnées correspondant aux positions tactiles respectives, et
    identifier, en se basant sur le fait que le dispositif électronique est identifié comme étant dans un mode vertical sur la base des informations d'orientation, la position tactile relative du côté supérieure parmi la pluralité de positions tactiles en comparant la valeur de l'axe X parmi les valeurs de coordonnées correspondant aux positions tactiles respectives.

3. Dispositif électronique de la revendication 2, dans lequel le processeur (140) est en outre configuré pour :

    identifier, en se basant sur le fait que le dispositif électronique est identifié comme étant dans un mode horizontal, une position tactile à laquelle une magnitude de la valeur de l'axe Y est relativement plus grande que la position tactile relative du côté supérieure, en comparant la magnitude de la valeur de l'axe Y parmi les valeurs de coordonnées correspondant aux positions tactiles respectives, et

identifier, en se basant sur le fait que le dispositif électronique est identifié comme étant dans un mode vertical, une position tactile à laquelle la magnitude de la valeur de l'axe X est relativement plus grande que la position tactile relative du côté supérieure, en comparant la magnitude de la valeur de l'axe X parmi les valeurs de coordonnées correspondant aux positions tactiles respectives.

**4.** Dispositif électronique de la revendication 1,
dans lequel le processeur (140) est en outre configuré pour :
identifier la position tactile relative du côté supérieure parmi la pluralité de positions tactiles en comparant une valeur absolue d'une valeur d'axe correspondant à l'au moins un axe identifié parmi les valeurs de coordonnées correspondant aux positions tactiles respectives.

**5.** Dispositif électronique de la revendication 4, dans lequel le processeur (140) est en outre configuré pour :
identifier, en se basant sur le fait que le dispositif électronique est identifié comme étant incliné dans une direction gravitationnelle, la position tactile relative du côté supérieure parmi la pluralité de positions tactiles en comparant la valeur absolue de l'au moins une valeur d'axe identifiée parmi les valeurs de coordonnées correspondant aux positions tactiles respectives.

**6.** Dispositif électronique de la revendication 5, dans lequel le processeur (140) est en outre configuré pour :

calculer une première valeur correspondant à la direction gravitationnelle sur la base d'une valeur racine carrée d'une valeur dans laquelle la valeur de l'axe X et la valeur de l'axe Y sont élevées au carré et additionnées parmi les valeurs de coordonnées correspondant à une première position tactile, les informations d'orientation et un rapport entre la valeur de l'axe Y et la valeur de l'axe X de la première position tactile,
calculer une deuxième valeur correspondant à la direction gravitationnelle sur la base d'une valeur racine carrée d'une valeur dans laquelle la valeur de l'axe X et la valeur de l'axe Y sont élevées au carré et additionnées parmi les valeurs de coordonnées correspondant à une deuxième position tactile, les informations d'orientation et un rapport entre la valeur de l'axe Y et la valeur de l'axe X de la deuxième position tactile, et
identifier une position tactile correspondant à une valeur relativement grande parmi la première valeur et la seconde valeur comme étant la position tactile relative du côté supérieure.

**7.** Dispositif électronique de la revendication 1,

dans lequel le capteur capacitif (120) est mis en œuvre sous la forme d'un panneau de capacité disposé sous le panneau d'affichage (110), ou
dans lequel le capteur capacitif (120) est mis en œuvre sous la forme d'une pluralité de capteurs capacitifs (120) disposés à distance les uns des autres sous le panneau d'affichage (110).

**8.** Dispositif électronique de la revendication 1, dans lequel le processeur (140) est configuré pour :
identifier, sur la base d'une entrée tactile de type sans contact reçue, la pluralité de positions tactiles correspondant à des données tactiles supérieures ou égales à une valeur seuil dans le panneau d'affichage (110) sur la base des secondes données de détection.

**9.** Procédé de commande d'un dispositif électronique, le procédé de commande comprenant :

identifier les informations d'orientation du dispositif électronique en se basant sur les premières données de détection obtenues par un capteur d'accélération (130) ;
identifier une pluralité de positions tactiles correspondant à des données tactiles supérieures ou égales à une valeur seuil dans un panneau d'affichage (110) en se basant sur les secondes données de détection obtenues par un capteur capacitif (120) ;
obtenir des informations de coordonnées correspondant à la pluralité de positions tactiles identifiées, les informations de coordonnées correspondant aux positions tactiles respectives comprenant une valeur de l'axe X et une valeur de l'axe Y ;
identifier au moins un axe parmi l'axe X ou l'axe Y sur la base des informations d'orientation ;
identifier une position tactile relative du côté supérieur parmi la pluralité de positions tactiles en comparant une valeur d'axe correspondant à l'axe identifié parmi les valeurs de coordonnées correspondant aux positions tactiles respectives ; et
réaliser une opération correspondant à la position tactile relative du côté supérieure identifiée.

**10.** Procédé de commande de la revendication 9, dans lequel l'identification de la position tactile relative du côté supérieure comprend :

identifier, en se basant sur le fait que le dispositif électronique est identifié comme étant dans un mode horizontal sur la base des informations d'orientation, la position tactile relative du côté supérieure parmi la pluralité de positions tactiles en comparant la valeur de l'axe Y parmi les valeurs de coordonnées correspondant aux positions tactiles respectives ; et

identifier, en se basant sur le fait que le dispositif électronique est identifié comme étant dans un mode vertical sur la base des informations d'orientation, la position tactile relative du côté supérieure parmi la pluralité de positions tactiles en comparant la valeur de l'axe X parmi les valeurs de coordonnées correspondant aux positions tactiles respectives.

**11.** Procédé de commande de la revendication 10, dans lequel l'identification de la position tactile relative du côté supérieure comprend :

identifier, en se basant sur le fait que le dispositif électronique est identifié comme étant dans un mode horizontal, une position tactile à laquelle une magnitude de la valeur de l'axe Y est relativement plus grande que la position tactile relative du côté supérieure, en comparant la magnitude de la valeur de l'axe Y parmi les valeurs de coordonnées correspondant aux positions tactiles respectives ; et

identifier, en se basant sur le fait que le dispositif électronique est identifié comme étant dans un mode vertical, une position tactile à laquelle une magnitude de la valeur de l'axe X est relativement plus grande que la position tactile relative du côté supérieure, en comparant la magnitude de la valeur de l'axe X parmi les valeurs de coordonnées correspondant aux positions tactiles respectives.

**12.** Procédé de commande de la revendication 9,
dans lequel l'identification de la position tactile relative du côté supérieure comprend :
identifier la position tactile relative du côté supérieure parmi la pluralité de positions tactiles en comparant une valeur absolue d'une valeur correspondant à l'au moins un axe identifié parmi les valeurs de coordonnées correspondant aux positions tactiles respectives.

**13.** Support d'enregistrement lisible par ordinateur non transitoire stockant des instructions informatiques pour un dispositif électronique afin d'effectuer une opération en se basant sur l'exécution par un processeur (140) du dispositif électronique, l'opération comprenant :

identifier les informations d'orientation du dispositif électronique en se basant sur les premières données de détection obtenues par un capteur d'accélération (130) ;

identifier une pluralité de positions tactiles correspondant à des données tactiles supérieures ou égales à une valeur seuil dans un panneau d'affichage (110) en se basant sur les secondes données de détection obtenues par un capteur capacitif (120) ;

obtenir des informations de coordonnées correspondant à la pluralité de positions tactiles identifiées, les informations de coordonnées correspondant aux positions tactiles respectives comprenant une valeur de l'axe X et une valeur de l'axe Y ;

identifier au moins un axe parmi l'axe X ou l'axe Y sur la base des informations d'orientation ;

identifier une position tactile relative du côté supérieur parmi la pluralité de positions tactiles en comparant une valeur d'axe correspondant à l'axe identifié parmi les valeurs de coordonnées correspondant aux positions tactiles respectives, et

réaliser une opération correspondant à la position tactile relative du côté supérieure identifiée.

# FIG. 1A

100

Touchscreen

MAGNITUDE OF
CAPACITANCE SIGNAL

# FIG. 1B

# FIG. 2

100

110

140

130

DISPLAY
PANEL

PROCESSOR

ACCELERATION
SENSOR

120

CAPACITIVE
SENSOR

# FIG. 3A

# FIG. 3B

# FIG. 4A

# FIG. 4B

# FIG. 5A

# FIG. 5B

# FIG. 6

100'

| 110 DISPLAY PANEL | 140 PROCESSOR | 150 MEMORY |
|---|---|---|
| 120 CAPACITIVE SENSOR | | 160 USER INTERFACE |
| 130 ACCELERATION SENSOR | | 170 OUTPUT PART |

# FIG. 7

START

IDENTIFY ORIENTATION INFORMATION OF USER TERMINAL BASED ON FIRST SENSING DATA OBTAINED BY ACCELERATION SENSOR ~S710

IDENTIFY PLURALITY OF TOUCH POSITIONS CORRESPONDING TO TOUCH DATA OF GREATER THAN OR EQUAL TO THRESHOLD VALUE FROM A DISPLAY BASED ON SECOND SENSING DATA OBTAINED BY CAPACITIVE SENSOR ~S720

IDENTIFY RELATIVELY UPPER SIDE TOUCH POSITION FROM AMONG PLURALITY OF TOUCH POSITIONS BASED ON COORDINATE INFORMATION CORRESPONDING TO ORIENTATION INFORMATION AND RESPECTIVE TOUCH POSITIONS ~S730

PERFORM OPERATION CORRESPONDING TO IDENTIFIED TOUCH POSITION ~S740

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101683019 B1
- KR 20140032265 A
- US 2015181337 A1
- US 2010172518 A1
- US 2009225026 A1
- US 2008012835 A1
- EP 2159670 A2
- US 2012176343 A1